# EUROPEAN PATENT APPLICATION

(11) **EP 1 743 807 A1**
(43) Date of publication of application: **17.01.2007**
(21) Application number: 06380184.9
(22) Date of filing: 29.06.2006
(51) Int. Cl.: B60R 13/08, B60J 10/00, B60S 1/04

(54) **Insulation system for the engine compartment based on a multi-material assembly part**

(30) Priority: 14.07.2005 ES 200501712
(71) Applicant: Möllertech Orense, S.L., 32710 Pereiro de Aguiar (Orense) (ES)
(72) Inventor: Gonzalez Lopez, Alberto, 01470 Amurrio (Alava) (ES)
(74) Representative: Canadell-Isern, Roberto

(57) **Abstract**

**SUMMARY**

**INSULATION SYSTEM FOR THE ENGINE COMPARTMENT BASED ON A MULTI-MATERIAL ASSEMBLY PART**, preferentially intended for motor vehicles, which consists of a single piece (1) made of several water and noise insulting materials and which is placed at the bottom of the windshield (2) of a vehicle (3). This part (1) has three well differentiated zones (1a, 1b, 1c) such that, beginning with a length greater than that of the windshield (2), a division of this measurement is made that delimits three zones (1a, 1b, 1c), two of which (1a, 1c) are made of a hard plastic material corresponding to a water grille (1a) and a cross piece (1c), whereas the central zone is an easily deformable soft joint (1b).

## Description

### PURPOSE OF THE INVENTION

The purpose of this Invention is an insulation system for the engine compartment based on a multi-material assembly part, especially intended for the automobile industry although other applications are not excluded, and which, for the function for which it is intended, offers several advantages that will be described hereinafter, apart from others inherent in its organization and constitution.

### BACKGROUND OF THE INVENTION

At present, as reference to the state of the art, it should be mentioned that in the automobile industry and several other industries, insulation of the engine compartment against water from the outside is fundamentally achieved with a set of three pieces, i.e. the water grille, the crosspiece and an extruded joint which, as it nominally interferes with the environment (usually the hood plate), does not let water through. The whole assembly also has an acoustic insulation component.

### DESCRIPTION OF THE INVENTION

The purpose of this invention is to provide watertightness, which before was achieved with an assembly, by means of a single part made with several materials that meet the necessary conditions of water and noise insulation.

This part is located at the bottom of the windshield, e.g. of a vehicle, and it has different functions, such as rerouting rain water towards the sides of the vehicle and also insulating the engine against water filtration, and it helps to decrease the noise transmitted to the passenger compartment.

This part would be formed by three well differentiated zones. Beginning with the length, which will be greater than the windshield, a division must be made according to this measurement to delimit the three zones. Of these zones, there are two that are made of hard plastic material, which may or may not be the same, and the central section is made of a soft material capable of deformation without much effort.

The two sections of hard material should be adaptable to each other so that when they are joined by any means, whether by clips or externally (clamps or screws), they make the soft material take on a circular shape, which performs the functions of the extruded piece for watertightness, and a technical interference with the hood is defined to fulfill all the functions.

Each section of the part may have different materials with different requirements, and therefore the patent should expressly state this diversity.

To complement the following description and to help better understand the features, this description is accompanied by a set of drawings whose figures, on an illustrative but not limitative basis, show the most significant details of the invention.

### BRIEF DESCRIPTION OF THE FIGURES

Figure 1. Shows a perspective of an application of the invention to an automobile.
Figure 2. Shows a cross section of the part that provides the mentioned insulation system.
Figure 3. Shows a view similar to Figure 2 and in detail, but with the two sections of hard material fitted to each other and joined so that the soft material takes on an appreciably circular shape, which performs the functions of the extruded piece.

### DESCRIPTION OF A SAMPLE EXEUCTION OF THE INVENTION

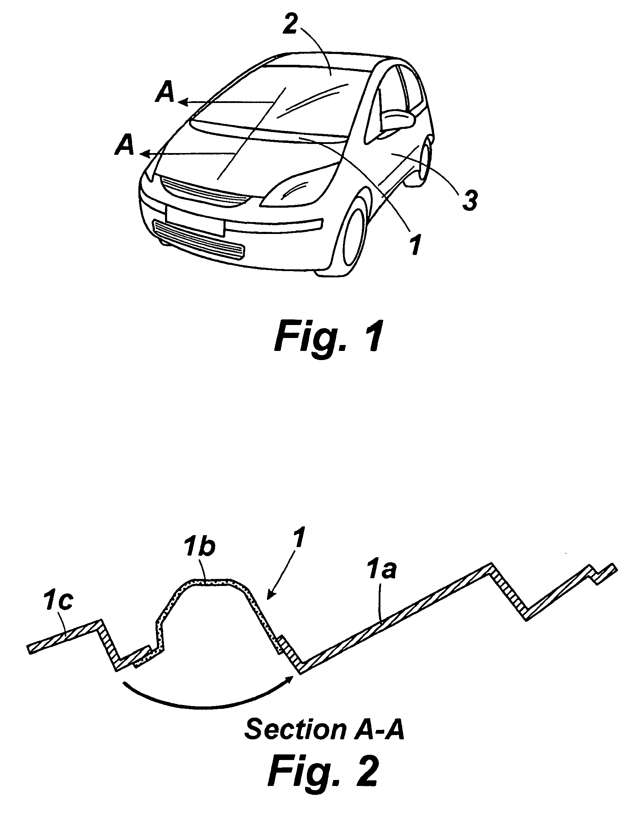

Based on the above mentioned figures and in accordance with the numbering used, a sample execution of the invention can be seen in these figures, which is an insulation system for the engine compartment based on a multi-material assembly part, preferentially intended for the automobile industry, and which consists of a single part -1-, made of several materials that meet the necessary conditions of insulation against water and noise, and which is located at the bottom of the windshield -2- of a vehicle -3- (Fig. 1).

This part -1- is formed by three well differentiated zones such that, beginning with the length, which will be greater than the windshield -2-, a division of this measurement is made to delimit three zones -1a-1b-1c-, two of which -1a,1c- are made of a hard plastic material, which may or may not be the same, and which correspond to a water grille -1a- and a cross piece -1c-, whereas the central zone is a soft joint -1b- that can be deformed without much effort(Fig. 2).

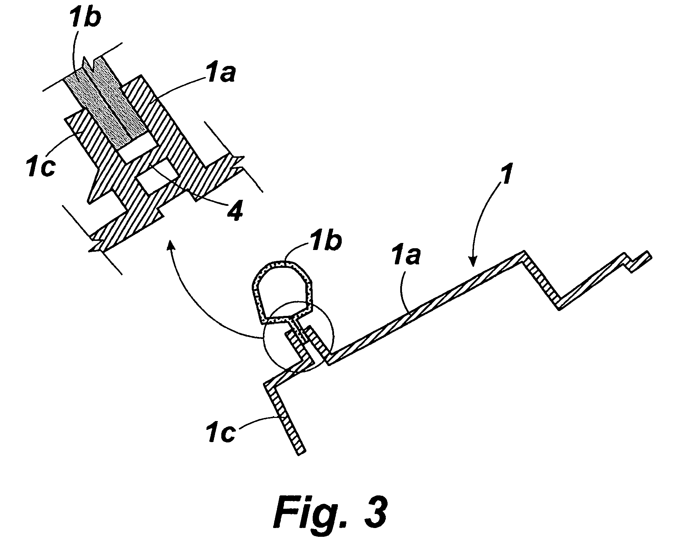

The two zones -1a-1c- of hard material should be adaptable to each other in such a way that, when they are joined by any means -4-, whether in the zones themselves -1a-1c- or externally, they make the soft joint -1b- take on an approximately circular shape, capable of performing the functions of the extruded piece (Fig. 3).

Of note is the fact that each zone of the part may be made of different materials with different requirements.

The invention has different functions, such as rerouting rain water towards the sides of the vehicle and also insulating the engine against water filtration, and it helps to decrease the noise transmitted to the passenger compartment.

## Claims

1. INSULATION SYSTEM FOR THE ENGINE COMPARTMENT BASED ON A MULTI-MATERIAL ASSEMBLY PART, preferentially intended for the automobile industry, although many other applications are not excluded, and which has different functions such as rerouting rain water towards the sides of the vehicle and also insulating the engine against water filtration, and it helps to decrease the noise transmitted to the passenger compartment, **characterized by** the fact that it is a single piece (1) made of several water and noise insulting materials, which is placed at the bottom of the windshield (2) of a vehicle (3); this part (1) has three well differentiated zones (1a, 1b, 1c) such that, beginning with a length greater than that of the windshield (2), a division is made that delimits three zones (1a, 1b, 1c), two of which (1a, 1c) are made of a hard plastic material corresponding to a water grille (1a) and a cross piece (1c), and the central zones is an easily deformable soft joint (1b).
